# EUROPEAN PATENT APPLICATION

(11) **EP 4 664 854 A1**
(43) Date of publication of application: **17.12.2025**
(21) Application number: 24752792.2
(22) Date of filing: 02.02.2024
(51) Int. Cl.: H04L 61/5007

(54) **INFORMATION ACQUISITION METHOD AND APPARATUS, AND COMMUNICATION DEVICE**

(30) Priority: 09.02.2023 CN 202310091112
(71) Applicant: Vivo Mobile Communication Co., Ltd., Dongguan, Guangdong 523863 (CN)
(72) Inventor: LV, Huazhang, Dongguan, Guangdong 523863 (CN)
(74) Representative: dompatent
(86) International application number: PCT/CN2024/075365
(87) International publication number: WO 2024/164936

(57) **Abstract**

The present application relates to the technical field of communications, and discloses an information acquisition method and apparatus, and a communication device. The information acquisition method in embodiments of the present application comprises: a first communication device receives a first request, wherein the first request is used for requesting to obtain first information; the first information comprises at least one of the following: a second IP address corresponding to a first IP address, a mapping relationship between the first IP address and the second IP address, the second IP address, and a second port number; the second port number is related to the second IP address; and the first IP address is a private IP address, and the second IP address is a public IP address.

## Description

### CROSS-REFERENCE TO RELATED APPLICATIONS

This application claims priority to Chinese Patent Application No.202310091112.1, filed in China on February 9, 2023, which is incorporated herein by reference in its entirety.

### TECHNICAL FIELD

This application pertains to the field of communication technologies, and specifically relates to a method and apparatus for obtaining information, and a communication device.

### BACKGROUND

In scenarios involving terminal data collection, typically, an application function (Application Function, AF) receives a data collection request from a 5G core network, where the request carries a terminal identifier. However, the AF needs to know a public IP address of the terminal corresponding to the terminal identifier, and only then can it determine from which terminal to perform data collection, since the AF can obtain an IP address of a terminal and determine a target terminal for data collection based on this IP address. In the related art, it is only possible to obtain a private IP address of a terminal based on a terminal identifier, but the AF cannot obtain information about a public IP address of the terminal. Without access to the public IP address of the terminal, the AF is unable to determine from which terminal to perform data collection.

### SUMMARY

Embodiments of this application provide a method and apparatus for obtaining information, and a communication device to address the problem in the related art where the AF cannot obtain information about a public IP address of a terminal.

According to a first aspect, a method for obtaining information is provided, where the method includes:
receiving, by a first communication device, a first request, where the first request is used for requesting to obtain first information; and
the first information includes at least one of the following:
   a second internet protocol IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

According to a second aspect, a method for obtaining information is provided, where the method includes:
sending, by a second communication device, a first request to a first communication device, where the first request is used for requesting to obtain first information; and
the first information includes at least one of the following:
   a second IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

According to a third aspect, a method for obtaining information is provided, where the method includes:
receiving, by a third communication device, first information sent by a first communication device or a second communication device; where
the first information includes at least one of the following:
   a second IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

According to a fourth aspect, an apparatus for obtaining information is provided, where the apparatus includes:
a first receiving module, configured to receive a first request, where the first request is used for requesting to obtain first information; and
the first information includes at least one of the following:
   a second internet protocol IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

According to a fifth aspect, an apparatus for obtaining information is provided, where the apparatus includes:
a first sending module, configured to send a first request to a first communication device, where the first request is used for requesting to obtain first information; and
the first information includes at least one of the following:
   a second IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

According to a sixth aspect, an apparatus for obtaining information is provided, where the apparatus includes:
a second receiving module, configured to receive first information sent by a first communication device or a second communication device; where
the first information includes at least one of the following:
   a second IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

According to a seventh aspect, a communication device is provided, where the communication device includes a processor and a memory, the memory stores a program or instructions capable of running on the processor, and when the program or instructions are executed by the processor, the steps of the method according to the first aspect, the second aspect, or the third aspect are implemented.

According to an eighth aspect, a communication device is provided, where the communication device includes a processor and a communication interface, where the communication interface is configured to receive a first request, and the first request is used for requesting to obtain first information; or the communication interface is configured to send a first request to a first communication device, and the first request is used for requesting to obtain first information; or the communication interface is configured to receive first information sent by a first communication device or a second communication device; and the first information includes at least one of the following: a second IP address corresponding to a first IP address; a mapping relationship between the first IP address and the second IP address; the second IP address; and a second port number, where the second port number is associated with the second IP address, and the first IP address is a private IP address, and the second IP address is a public IP address.

According to a ninth aspect, a communication system is provided, where the communication system includes at least one of a first communication device, a second communication device, and a third communication device, the first communication device is capable of being configured to execute the steps of the method for obtaining information according to the first aspect, the second communication device is capable of being configured to execute the steps of the method for obtaining information according to the second aspect, and the third communication device is capable of being configured to execute the steps of the method for obtaining information according to the third aspect.

According to a tenth aspect, a readable storage medium is provided, where the readable storage medium stores a program or instructions, and when the program or instructions are executed by a processor, the steps of the method for obtaining information according to the first aspect, the second aspect, or the third aspect are implemented.

According to an eleventh aspect, a chip is provided, where the chip includes a processor and a communication interface, the communication interface is coupled to the processor, and the processor is configured to run a program or instructions to implement the steps of the method for obtaining information according to the first aspect, the second aspect, or the third aspect.

According to a twelfth aspect, a computer program/program product is provided, where the computer program/program product is stored in a storage medium, and the computer program/program product is executed by at least one processor to implement the steps of the method for obtaining information according to the first aspect, the second aspect, or the third aspect.

In the embodiments of this application, a first communication device receives a first request used for requesting to obtain first information, where the first information includes at least one of the following: a second IP address corresponding to a first IP address; a mapping relationship between the first IP address and the second IP address; the second IP address; and a second port number associated with the second IP address. Thus, the first communication device can respond to a device sending the first request (for example, a second communication device) by sending the first information to the device sending the first request, so that the device can obtain the second IP address based on the first information, thereby ensuring that the device can determine a corresponding terminal based on the second IP address to perform data collection on this terminal.

### BRIEF DESCRIPTION OF DRAWINGS

FIG. 1a is a block diagram of a wireless communication system to which embodiments of this application are applicable;
FIG. 1b is a flowchart of obtaining an IP address of terminal by an AF in the related art;
FIG. 2 is a first flowchart of a method for obtaining information according to an embodiment of this application;
FIG. 3 is a second flowchart of a method for obtaining information according to an embodiment of this application;
FIG. 4 is a third flowchart of a method for obtaining information according to an embodiment of this application;
FIG. 5a is a first schematic diagram of an application scenario of a method for obtaining information according to an embodiment of this application;
FIG. 5b is a second schematic diagram of an application scenario of a method for obtaining information according to an embodiment of this application;
FIG. 5c is a third schematic diagram of an application scenario of a method for obtaining information according to an embodiment of this application;
FIG. 5d is a fourth schematic diagram of an application scenario of a method for obtaining information according to an embodiment of this application;
FIG. 6 is a first structural diagram of an apparatus for obtaining information according to an embodiment of this application;
FIG. 7 is a second structural diagram of an apparatus for obtaining information according to an embodiment of this application;
FIG. 8 is a third structural diagram of an apparatus for obtaining information according to an embodiment of this application;
FIG. 9 is a structural diagram of a communication device according to an embodiment of this application; and
FIG. 10 is a structural diagram of another communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship. The term "or" in the specification and claims indicates at least one of the connected objects, for example, "A or B" encompasses three scenarios: scenario one, including A but not B; scenario two, including B but not A; and scenario three, including both A and B.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

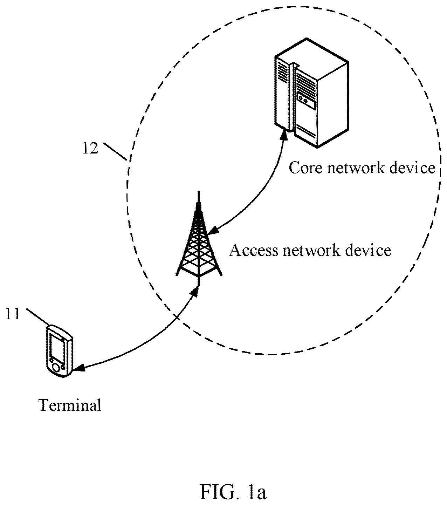

FIG. 1a is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that the embodiments of this application do not impose any limitation on a specific type of the terminal 11. The network-side device 12 may include an access network device or a core network device, where the access network device may also be called a radio access network device, a radio access network (Radio Access Network, RAN), a radio access network function, or a radio access network unit. The access network device may include a base station, a wireless local area network (Wireless Local Area Network, WLAN) access point, or a wireless fidelity (Wireless Fidelity, Wi-Fi) node. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission-reception point (Transmission and Reception Point, TRP), or another appropriate term in the art. Provided that the same technical effect is achieved, the base station is not limited to a specific technical term. It should be noted that the base station in the NR system is only used as an example in the embodiments of this application for illustration, but a specific type of the base station is not limited. The core network device may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of this application are described with only the core network device in the NR system as an example, but the core network device is not limited to any specific type.

For better understanding, the following explains related concepts and technologies that may be involved in this embodiment of this application,
Network address translation (Network Address Translation, NAT):
NAT is an address translation technology, which can convert an IP address in the header of an internet protocol (Internet Protocol, IP) data packet into another IP address and achieve address reuse by translating port numbers. NAT, serving as a transitional technology to alleviate the exhaustion of IPv4 public addresses, has been widely used due to its simple implementation.

In the 3rd generation partnership project (3rd Generation Partnership Project, 3GPP), the 5G core network (5G Core Network, 5GC) typically assigns private IP addresses to terminals. Thus, after the traffic of these terminals passes through the UPF, the UPF performs NAT processing on the private IP addresses of the terminals, converting the private IP addresses of these user equipments (User Equipment, UE, that is, terminals) into public IP addresses. The purpose of this is also to conserve IP addresses and reuse IP addresses.

Currently, the AF can only see the public IP address of a terminal, but the AF cannot deduce the private IP address corresponding to the public IP address before NAT. Because the AF is located on the N6 interface, the AF cannot see the internal topology of the 5G core network on the N6 interface and thus cannot obtain the private IP addresses of the terminals.

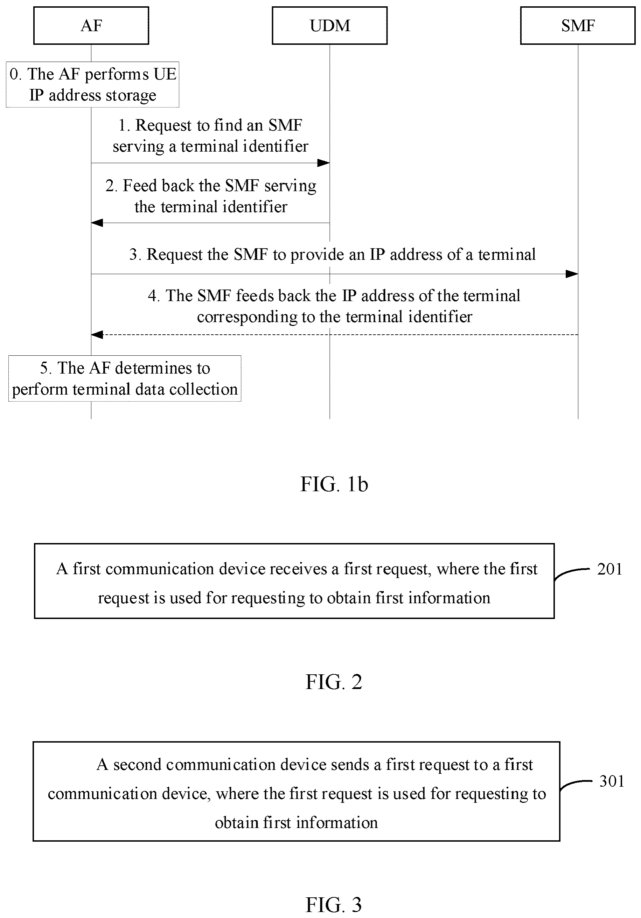

In 3GPP, a set of data collection procedures has been designed. The network data analytics function (Network Data Analytics Function, NWDAF) sends a subscription request to the AF, or sends a subscription request to the NEF, and then the NEF sends the subscription request to the AF, where the subscription request includes an identifier of UE, requesting the AF to perform data collection from a terminal corresponding to the identifier. However, the AF needs to determine, based on the identifier of the terminal, an IP address of the terminal corresponding to the identifier. This is because although the AF can know the IP addresses of all terminals with which it has service connections, it does not know the relationship between the terminal identifiers and the IP addresses of the terminals. In the related art, the procedure for an AF or NEF (where NEF may request an IP address of a terminal corresponding to a terminal identifier on behalf of an untrusted AF) to obtain an IP address of a terminal is shown in FIG. 1b, which mainly includes the following steps.

Step 1: The AF or NEF sends a terminal identifier to a UDM, requesting to find an SMF serving the terminal identifier.

Step 2: The UDM feeds back to the AF or NEF the ID or IP address of the SMF serving the terminal identifier.

Step 3: The AF or NEF sends a request to the SMF, requesting the SMF to provide an IP address of a terminal, where the request includes the terminal identifier.

Step 4: The SMF feeds back to the AF or NEF the IP address of the terminal corresponding to the terminal identifier.

Step 5: The AF compares the IP address of the terminal fed back by the SMF with the IP addresses of the terminal currently stored or obtained by the AF to determine the target terminal and perform data collection from this terminal. In the case of the NEF, after receiving the IP address of the terminal from the SMF, the NEF sends the IP address of the terminal to the AF, and the AF then compares this IP address of the terminal with IP addresses of terminals currently stored or obtained by the AF to determine the target terminal and perform data collection from this terminal.

However, the IP addresses that the AF can store or has obtained are all public IP addresses. To determine the target terminal for data collection, the AF needs the public IP address corresponding to the terminal identifier to determine from which UE to perform data collection. Nevertheless, from the above procedure, it appears that the SMF or 5G core network device can only provide the private IP address of the terminal. A private IP address is not helpful for the AF to identify a specific UE, because the AF can only see the public IP address of the terminal. Providing the private IP address still leaves the AF unable to determine from which terminal to perform data collection. In view of the foregoing problems, an embodiment of this application provides a method for obtaining information.

In this embodiment of this application, the following concepts are explained:
The first communication device may be a UPF, an SMF, or a terminal, or may be one or more of core network devices.
The second communication device may be an SMF, an NWDAF, an NEF, or a terminal, or may be one or more of core network devices.
The third communication device may be an NWDAF, an NEF, an AF, or a terminal, or may be one or more of core network devices.
The fourth communication device may be an NEF, an AF, or a terminal, or may be one or more of core network devices.

In this application, the private IP address (private IP address) may also be referred to as a private IP address of a terminal, a private network IP address, a private network IP address of a terminal, a private IP address segment, or a private IP domain. All the above terms are deemed to have the same or similar meanings in this application.

In this application, the public IP address (public IP address) or public IP address of the terminal may also be referred to as a public network IP address, a public network IP address of the terminal, a public IP address, a public IP address of the terminal, a public IP address segment, a public IP domain, or the like. All the above terms are deemed to have the same or similar meanings in this application.

In this application, the public IP address or private IP address may be a public or private IP address of a terminal, and may also be a public IP address or private IP address of a server or another entity capable of having an IP address. This application takes obtaining a public IP address of a terminal as an example.

The following describes in detail the method for obtaining information provided in the embodiments of this application using some embodiments and application scenarios thereof with reference to the accompanying drawings.

Referring to FIG. 2, FIG. 2 is a first flowchart of a method for obtaining information according to an embodiment of this application. The method is applied to a first communication device. As shown in FIG. 2, the method includes the following steps.

Step 201: The first communication device receives a first request, where the first request is used for requesting to obtain first information; and
the first information includes at least one of the following:
a second IP address corresponding to a first IP address;
a mapping relationship between the first IP address and the second IP address;
the second IP address; and
a second port number, where the second port number is associated with the second IP address; and
the first IP address is a private IP address, and the second IP address is a public IP address.

It should be noted that the association of the second port number with the second IP address may mean that the second port number is a port number of the second IP address.

It should be noted that the first information may further include a first port number, where the first port number is associated with the first IP address. It should be noted that the association of the first port number with the first IP address may mean that the first port number is a port number of the first IP address.

It should be noted that the first IP address in the first information may also include the first IP address or the first port number.

It should be noted that the second IP address corresponding to the first IP address means that the first IP address undergoes a NAT operation to obtain the second IP address, or that the second IP address undergoes a reverse NAT operation to obtain the first IP address.

It should be noted that the mapping relationship between the first IP address and the second IP address means that there is a NAT relationship between the first IP address and the second IP address. For example, the mapping relationship may be that: the first IP address is converted to the second IP address after a NAT operation; or the second IP address is the first IP address before a NAT operation, or the second IP address is converted to the first IP address after a reverse NAT operation or mapping. Therefore, after obtaining the mapping relationship, inputting the first IP address can yield the second IP address.

Optionally, the first communication device may be a UPF but is not limited to this core network device. The UPF receives a first request, for example, from an SMF, an NWDAF, an NEF, or another core network device, where the first request is used for requesting to obtain first information, for example, requesting to obtain the second IP address, the second port number corresponding to the second IP address, or the mapping relationship between the first IP address and the second IP address. Optionally, in this embodiment of this application, the first IP address is a private IP address (also referred to as a private network IP address, a private IP address, or the like), and the second IP address is a public IP address (also referred to as a public network IP address, a public IP address, or the like). That is, the first request may be used for requesting to obtain a public IP address, the second port number corresponding to the public IP address, the mapping relationship between a private IP address and a public IP address, the public IP address or public IP address and port number corresponding to a specific private IP address, or the like. For example, the AF sends the first request to the UPF through the SMF to request to obtain a public IP address, so that the AF can obtain the public IP address to ensure that the AF can determine from which terminal to perform data collection.

It should be noted that in this embodiment of this application, the first communication device may alternatively be another core network device. For example, the first communication device may alternatively be an SMF, where the SMF may receive the first request from an AF, an NEF, or an NWDAF to request to obtain a public IP address.

In this embodiment of this application, the first communication device receives a first request used for requesting to obtain first information, where the first information includes at least one of the following: a second IP address corresponding to a first IP address; a mapping relationship between the first IP address and the second IP address; the second IP address; and a second port number associated with the second IP address. Optionally, the first communication device may store the above-mentioned first information, and thus the first communication device can respond to a device sending the first request (for example, a second communication device) by sending the first information to the device sending the first request, so that the device can obtain the second IP address based on the first information, thereby ensuring that the device can determine a corresponding terminal based on the second IP address to perform data collection on this terminal.

Optionally, the first request includes at least one of the following:
the first IP address;
a first port number, where the first port number is associated with the first IP address;
a terminal identifier; and
an event identifier (Event ID), where the event identifier is used for indicating invocation or subscription of a first service of the first communication device, and the first service is used for obtaining the first information.

The association of the first port number with the first IP address may mean that the first port number is a port number of the first IP address. For example, the first request includes a first port number, and upon receiving the first request, the first communication device can determine the corresponding first IP address based on the first port number and obtain the corresponding second IP address, second port number, or mapping relationship between the first IP address and the second IP address based on the first IP address. Alternatively, the first request may include both the first port number and the first IP address, and the first communication device obtains the first information, such as the second IP address, based on the first port number and the first IP address.

It should be noted that the first communication device can provide the second IP address and the second port number based on the first IP address and the first port number.

It should be noted that if the first request includes a terminal identifier, the first communication device can determine a terminal corresponding to the terminal identifier and thus determine the private IP address (that is, the first IP address) corresponding to the terminal, and obtain the first information based on the first IP address.

It should be noted that the terminal identifier carried in the first request can be used to assist the first communication device in providing the first information. The first communication device can determine the second IP address or the second port number based on the terminal identifier, the first IP address, and the first port number.

In one implementation, the terminal identifier includes at least one of the following: a subscription permanent identifier (Subscription Permanent Identifier, SUPI), a generic public subscription identifier (Generic Public Subscription Identifier, GPSI).

Alternatively, if the first request includes an event identifier, where the event identifier is used for indicating invocation of a first service of the first communication device, and the first service is used for obtaining the first information, the first communication device can obtain the first information through the event identifier. The event identifier is an event identifier that identifies the type of a subscribed event, for example, subscribing to the release of a PDU session or subscribing to the location of a terminal.

For example, the first communication device supports an event, which is obtaining a public IP address of a terminal. This event (event) ID may be named public (public) IP address (address) of UE. Other core network devices can subscribe to this event to obtain the public IP address of the terminal or the private IP address of the terminal from the first communication device.

It should be noted that when the first request includes an event identifier, it indicates that there is a need to subscribe to the event of the first communication device to obtain the public IP address of the terminal.

Additionally, the first communication device such as a UPF can register the events it supports, for example, supporting the subscription or provision of the event ID, that is, the private IP address of the terminal, to the NRF using Nnrf_NFManagement _NFRegister, indicating that the communication device supports this event and the function of providing or subscribing to the private IP address of the terminal.

In this way, in a case that the first communication device receives the first request, it can obtain the first information such as the second IP address based on the content carried in the first request.

Optionally, the first request further includes first indication information, and the first indication information is used for indicating at least one of the following:
the first IP address being a private IP address;
obtaining the second IP address corresponding to the first IP address; and
obtaining the first IP address or the second IP address corresponding to the terminal identifier.

In a case that the first request includes a terminal identifier, the first indication information is used for indicating to obtain the first IP address or the second IP address corresponding to the terminal identifier.

For example, the first request includes first indication information, where the first indication information is used to indicate that the first IP address is a private IP address. Thus, the first communication device can obtain, based on the first indication information, the public IP address (that is, the second IP address) corresponding to the private IP address. The first communication device may send the public IP address to a network element device (for example, the AF) sending the first request to ensure that the network element device can determine the corresponding terminal based on the public IP address to perform data collection on the terminal.

Optionally, the first IP address is an IP address of a terminal corresponding to the terminal identifier.

In one implementation, when the first communication device is a UPF, the first request may be at least one of the following:
Nupf_EventExposure_Subscribe; and
Nupf_GetPublicUEIPaddr_Get request.

In one implementation, when the first communication device is an SMF, the first request may be at least one of the following:
Nsmf_EventExposure_Subscribe; and
Nsmf_GetPublicUEIPaddr_Get request.

In one implementation, the first communication device may receive the first request from an SMF, NEF, NWDAF, AF, or other core network devices.

In this embodiment of this application, that the first communication device receives a first request includes:
the first communication device receives the first request sent by a second communication device.

In this case, the method may further include:
the first communication device sends a first response to the second communication device, where the first response includes the first information.

In one implementation, when the first communication device is a UPF, the first response may be at least one of the following:
Nupf_EventExposure_Notify; and
Nupf_GetPublicUEIPaddr_Get response.

In one implementation, when the first communication device is an SMF, the first request may be at least one of the following:
Nsmf_EventExposure_Notify; and
Nsmf_GetPublicUEIPaddr_Get response.

It can be understood that after the first communication device receives the first request from the second communication device requesting to obtain the first information, it may send a first response to the second communication device, where the first response includes the first information, thereby responding to the first request to ensure that the second communication device can obtain the first information and determine the corresponding terminal based on the first information to perform data collection on the terminal.

Referring to FIG. 3, FIG. 3 is a second flowchart of a method for obtaining information according to an embodiment of this application. The method is applied to a second communication device. As shown in FIG. 3, the method includes the following steps.

Step 301: The second communication device sends a first request to a first communication device, where the first request is used for requesting to obtain first information; and
the first information includes at least one of the following:
a second IP address corresponding to a first IP address;
a mapping relationship between the first IP address and the second IP address;
the second IP address; and
a second port number, where the second port number is associated with the second IP address; and
the first IP address is a private IP address, and the second IP address is a public IP address.

Optionally, the first request includes at least one of the following:
the first IP address;
a first port number, where the first port number is associated with the first IP address;
a terminal identifier; and
an event identifier, where the event identifier is used for indicating invocation of a first service of the first communication device, and the first service is used for obtaining the first information.

Optionally, the first request further includes first indication information, and the first indication information is used for indicating at least one of the following:
the first IP address being a private IP address;
obtaining the second IP address corresponding to the first IP address; and
obtaining the first IP address or the second IP address corresponding to the terminal identifier.

Optionally, in this embodiment of this application, before the second communication device sends a first request to a first communication device, the method further includes:
the second communication device receives a second request sent by a third communication device, where the second request is used for requesting to obtain the first information.

For example, the second communication device is an SMF, the third communication device is an AF or an NWDAF, and the first communication device may be a UPF. For instance, the AF sends a second request to the SMF, where the second request is used for requesting to obtain the first information; and after receiving the second request, the SMF sends a first request to the UPF for requesting to obtain the first information. In other words, it is equivalent to the SMF forwarding a request for requesting to obtain the first information to the UPF to request the UPF to provide the first information.

For example, in a case that the second communication device is an SMF (or may be another core network device), it receives a second request from an AF, an NEF, or an NWDAF (or may be another core network device), where the second request may be:
Nsmf_EventExposure_Subscribe; or other signaling. Then, the second communication device sends the first request to the first communication device.

For example, when the second communication device is an NEF (or may be another core network device), it receives a second request from an NWDAF or an AF (or may be another core network device), where the second request may be:
Nnef_UEPublicIP_Get request;
Nnef_EventExposure_Subscribe; or
other signaling. Then, the second communication device sends the first request to the first communication device (for example, a UPF).

Optionally, the second request includes at least one of the following:
the first IP address;
a first port number, where the first port number is associated with the first IP address;
a terminal identifier; and
first indication information, where the first indication information is associated with the first IP address or the second IP address.

It should be noted that the content included in the second request may be the same as or different from the content of the first request. For example, after the SMF receives the second request, if the second request includes only the first port number and the terminal identifier, the SMF may determine the corresponding first IP address based on the first port number and send the first request to the UPF, where the first request may include the first IP address, the first port number, and the terminal identifier.

It should be noted that the content included in the second request or the purpose of the content may be completely the same as or different from the content or purpose of the content included in the first request.

Optionally, the first request further includes first indication information, and the first indication information is used for indicating at least one of the following:
the first IP address being a private IP address;
obtaining the second IP address corresponding to the first IP address; and
obtaining the first IP address or the second IP address corresponding to the terminal identifier.

In a case that the second request includes a terminal identifier, the first indication information is used for indicating to obtain the first IP address or the second IP address corresponding to the terminal identifier.

Optionally, the first IP address is a private IP address, and the second IP address is a public IP address.

Optionally, the first IP address is an IP address of a terminal corresponding to the terminal identifier.

Optionally, after the second communication device receives a second request sent by a third communication device, the method further includes:
the second communication device determines the event identifier based on the second request.

It should be noted that the event identifier is used for indicating invocation of a first service of the first communication device, and the first service is used for obtaining the first information. In this embodiment of this application, the second request is used for requesting to obtain the first information. After receiving the second request, the second communication device learns that the third communication device intends to obtain the first information. The event identifier indicates invocation of the first service for obtaining the first information. Thus, the second communication device determines the event identifier based on the second request for requesting to obtain the first information.

In this embodiment of this application, after the second communication device sends a first request to a first communication device, the method further includes:
the second communication device receives a first response sent by the first communication device, where the first response includes the first information.

Further, after the second communication device receives a first response sent by the first communication device, the method further includes:
the second communication device sends the first information to the third communication device.

It can be understood that the second communication device receives the second request sent by the third communication device for requesting to obtain the first information, and the second communication device sends, based on the second request, the first request to the first communication device for requesting to obtain the first information. After determining the first information, the first communication device may respond to the first communication device by sending the first information to the second communication device, and then the second communication device sends the first information to the third communication device to respond to the second request of the third communication device. This enables the third communication device to obtain the second information, such as the public IP address, ensuring that it can determine the corresponding terminal based on the public IP address to perform data collection on the terminal.

It should be noted that the information acquisition method provided in this embodiment of this application corresponds to the method embodiment on the first communication device side. For the related concepts and implementation processes involved in this embodiment of this application, reference may be specifically made to the description in the method embodiment on the first communication device side. To avoid repetition, details of this embodiment are not described again.

Additionally, the second response may be, for example, sending the obtained first information to another communication device, such as the third communication device.

For example, when the second communication device is an SMF (or may be another core network device), it sends a second response to an AF, an NEF, or an NWDAF (or may be another core network device), where the second response may be:
Nsmf_EventExposure_Notify;
Nupf_EventExposure_Notify;
Nupf_GetPublicUEIPaddr_Get response; or
other signaling.

For example, when the second communication device is an NEF (or may be another core network device), it sends a second request to a third communication device NWDAF (or may be another core network device), where the second response may be:
Nnef_UEPublicIP_Get response;
Nnef_EventExposure_Notify; or
other signaling.

The second response includes the first information.

In one implementation, after the second communication device receives the second request, the second communication device may locally store the first information without triggering the sending of the first request to the first communication device, so that the second communication device can directly send the first information to the third communication device.

For example, after the third communication device AF, NEF, or NWDAF sends a second request (for example, Nsmf_EventExposure_Subscribe) to the second communication device (for example, SMF), the second communication device may have already obtained the first information from the first communication device in advance or the second communication device may locally store the first information. The second communication device can directly provide the first IP address, second IP address, first port number, or second port number based on the first IP address or terminal identifier carried in the second request. In other words, the second communication device can directly provide the public IP address corresponding to the private IP address or the private or public IP address corresponding to the terminal identifier without relying on the first communication device.

In one implementation, the first communication device, second communication device, and third communication device may all locally store the first information.

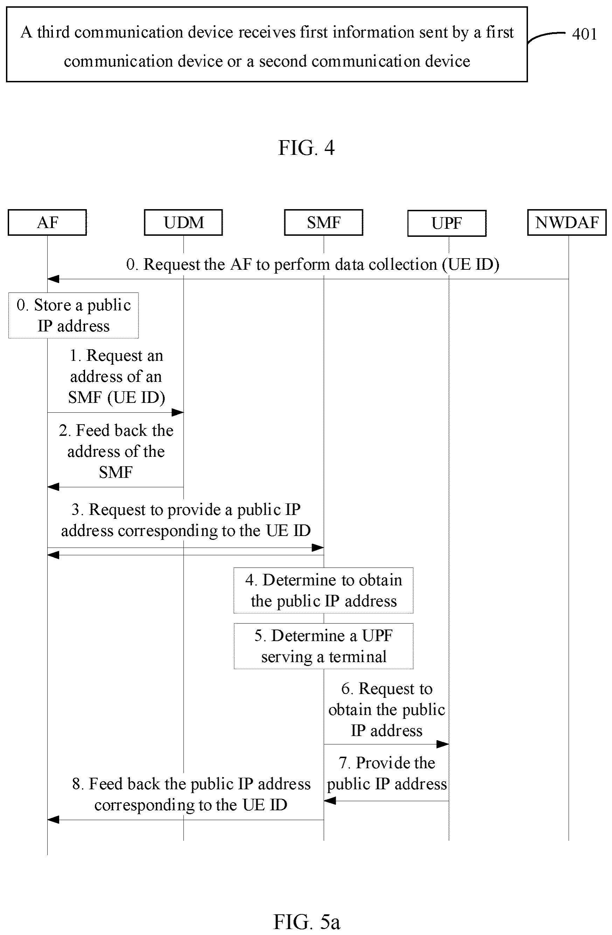

Referring to FIG. 4, FIG. 4 is a third flowchart of a method for obtaining information according to an embodiment of this application. The method is applied to a third communication device. As shown in FIG. 4, the method includes the following steps.

Step 401: The third communication device receives first information sent by a first communication device or a second communication device; where
the first information includes at least one of the following:
a second IP address corresponding to a first IP address;
a mapping relationship between the first IP address and the second IP address;
the second IP address; and
a second port number, where the second port number is associated with the second IP address; and
the first IP address is a private IP address, and the second IP address is a public IP address.

Optionally, the first IP address is a private IP address, and the second IP address is a public IP address.

For example, the third communication device is an AF or an NWDAF, the first communication device is a UPF, and the second communication device is an SMF. The AF or NWDAF may directly send a request to the UPF for requesting to obtain the first information and receive the first information fed back by the UPF; alternatively, the AF or NWDAF may request to obtain the first information from the UPF through the SMF and obtain the first information fed back by the UPF through the SMF. In this way, the AF or NWDAF can obtain the first information, such as the public IP address, so as to determine the corresponding terminal based on the public IP address to perform terminal data collection.

It should be noted that in this patent, the third communication device is illustrated by taking AF, NEF, and NWDAF as examples, but it may alternatively be one or more of other core network devices.

In one implementation, the third communication device may send a third request to the first communication device or the second communication device for requesting to obtain the first information. Optionally, the third request may be at least one of the following signaling to obtain the first information:
Nsmf_EventExposure_Notify;
Nupf_EventExposure_Notify;
Nnef_UEPublicIP_Get response;
Nupf_UEPublicIP_Get response;
Nnef_EventExposure_Notify; or
other signaling.

Optionally, the third request includes at least one of the following:
the first IP address;
a first port number, where the first port number is associated with the first IP address;
a terminal identifier; and
first indication information, where the first indication information is associated with the first IP address or the second IP address.

It should be noted that the third communication device sends a third request to the first communication device or the second communication device for requesting to obtain the first information. The third request may be completely the same as or different from the second request or the first request; and the information included in the third request or the purpose of the information may be completely the same as or different from the second request or the first request.

Optionally, the method further includes:
the third communication device sends a first subscription request to a fourth communication device, where the first subscription request is used for requesting to collect target terminal data.

In this embodiment of this application, after obtaining the first information, the third communication device may further send a first subscription request to a fourth communication device, where the first subscription request is used for requesting to collect target terminal data. The target terminal may be a terminal corresponding to the public IP address.

For example, the third communication device is an NWDAF, and the NWDAF may trigger the sending of the first subscription request to an AF or NEF to request data collection from the target terminal. For instance, the first subscription request may include the public IP address to ensure that the AF or NEF can determine the target terminal for data collection.

Optionally, the first subscription request includes at least one of the following:
a terminal identifier;
the second IP address; and
the second port number, where the second port number is associated with the second IP address.

For example, the first subscription request may include the second IP address (that is, the public IP address. In this way, the fourth communication device (for example, AF) can directly determine the target terminal corresponding to the second IP address for data collection without triggering any other processes.

Optionally, the second IP address is an IP address corresponding to the terminal identifier; and/or the second port number is a port number corresponding to the terminal identifier.

Optionally, at least one of the second IP address, the second port number, and the terminal identifier is used for determining a target terminal. In this way, the fourth communication device can determine the target terminal based on the first subscription request to perform data collection on the target terminal.

It should be noted that the information acquisition method provided in this embodiment of this application corresponds to the method embodiments on the first communication device side and the second communication device side. For the related concepts and implementation processes involved in this embodiment of this application, reference may be specifically made to the description in the method embodiments described in FIG. 2 and FIG. 3. To avoid repetition, details of this embodiment are not described again.

In one implementation, the first subscription request may include at least one of the following:
Naf_EventExposure_Subscribe;
Nnef_EventExposure_Subscribe; or
other signaling.

The third communication device such as an NWDAF may send a first subscription request to a fourth communication device (for example, to an NEF or AF), where the first subscription request may carry the first information.

After the fourth communication device receives the first subscription request, it can directly determine the target terminal based on the second IP address carried in the first information, that is, the public IP address of the terminal, and perform data collection.

If the first subscription request carries the first information, the fourth communication device can perform at least one of the following:
determining, based on the first information or the second IP address (that is, the public IP address of the terminal) in the first information, the target terminal and performing data collection from the target terminal.

For better understanding, the technical solutions provided in this application are explained below through several specific embodiments.

### Embodiment 1:

Referring to FIG. 5a, FIG. 5a is a first schematic diagram of an application scenario of a method for obtaining information according to an embodiment of this application, specifically including the following steps.

Step 0: An NWDAF requests an AF to perform data collection (or the NWDAF requests the AF to perform data collection through an NEF), where the request carries a UE ID, such as SUPI or GPSI; and the request is Naf_EventExposure_Subscribe or Nnef_EventExposure_Subscribe.

Step 1: The AF (or NEF, or NWDAF) requests an address of the SMF serving the UE from the UDM, where the request includes the UE ID.

Step 2: The UDM feeds back the address of the SMF to the AF.

Step 3: The AF (or NEF, or NWDAF) sends a request to the SMF for requesting the SMF to provide a public IP address corresponding to the terminal identifier.

Optionally, the request includes the terminal identifier (UE ID) and indication information, where the indication information is used for indicating to obtain the public IP address.

The request may be Nsmf_EventExposure_Subscribe.

The AF, NEF, or NWDAF may indicate to obtain at least one of the following from the SMF:
a private IP address of the terminal corresponding to the terminal identifier or a port number corresponding to the terminal identifier;
a public IP address of the terminal corresponding to the terminal identifier or a port number corresponding to the terminal identifier; and
a private or public IP address of the terminal corresponding to the terminal identifier or a port number corresponding to the terminal identifier.

Step 4: After receiving the indication information, the SMF determines that the public IP address needs to be provided, and the SMF can directly determine the private IP address corresponding to the terminal identifier; or
after receiving the request, the SMF defaults to providing the public IP address, private IP address, or port number simultaneously.

Step 5: The SMF determines the address of the UPF serving the terminal based on the terminal identifier; or
the SMF directly skips to Step 8 based on the first information stored locally and sends information such as the public IP address of the terminal and a port number to the AF, NEF, or NWDAF.

If the SMF cannot determine the first information, it requires assistance from the UPF.

The SMF can determine the private IP address of the terminal based on the request sent by the AF, NEF, or NWDAF.

Step 6: The SMF requests the public IP address of the terminal from the UPF, where the request includes the terminal identifier, event ID, and the private IP address of the terminal.

The signaling corresponding to the request may be:
Nupf_EventExposure_Subscribe; or
Nupf_GetPublicUEIPaddr_Get.

Step 7: The UPF provides the public IP address of the terminal.

The UPF sends the public IP address of the terminal to the SMF through at least one of the following signaling:
Nupf_EventExposure_Notify; and
Nupf_GetPublicUEIPaddr_Get response.

Step 8: The SMF sends the public IP address of the terminal to a trusted AF (and/or NEF).

The signaling may be Nsmf_EventExposure_Notify.

### Embodiment 2:

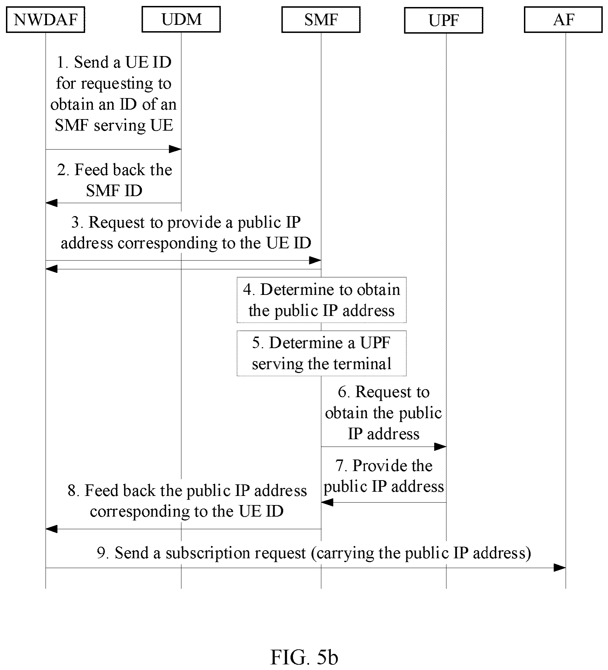

Referring to FIG. 5b, FIG. 5b is a second schematic diagram of an application scenario of a method for obtaining information according to an embodiment of this application, specifically including the following steps.

Step 1: An NWDAF sends a UE ID to a UDM for requesting to obtain an ID of an SMF serving the UE.

The premise of this process is that the NWDAF determines the terminal identifier and wishes to obtain the public IP address corresponding to the terminal identifier, then sends a subscription request to the AF or NEF for requesting to perform data collection.

Step 2: The UDM feeds back the SMF ID to the NWDAF.

Step 3: The NWDAF requests the public IP address corresponding to the UE ID from the SMF.

Steps 4 to 8 are the same as those in Embodiment 1 and are not repeated herein.

Step 9: After obtaining the public IP address, the NWDAF sends a subscription request to the AF or NEF, for example, sending Naf_Event_Exposure_Subscribe to the AF or Nnef_EventExposure_Subscribe to the NEF, where the subscription request includes the public IP address. After receiving the subscription request, the NEF also sends Naf_Event_Exposure_Subscribe to the AF.

In this way, after obtaining the public IP address of the terminal, the AF or NEF can determine a target terminal for data collection.

### Embodiment 3:

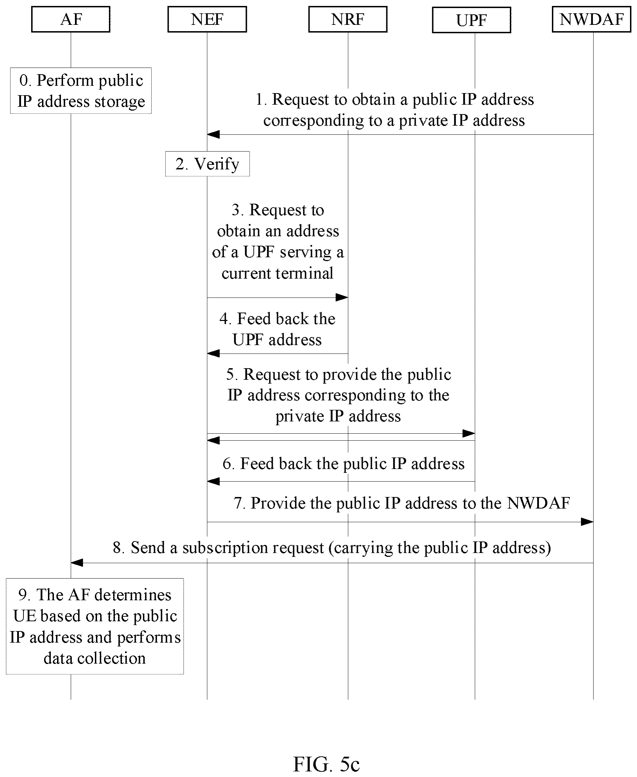

Referring to FIG. 5c, FIG. 5c is a third schematic diagram of an application scenario of a method for obtaining information according to an embodiment of this application, specifically including the following steps.

Step 1: An NWDAF sends a request to an NEF for requesting a public IP address corresponding to a private IP address.

The signaling may be:
Nnef_GetPublicUEIPaddr_Get.

The signaling may include a terminal identifier, a private IP address of a terminal, a port number, and the like.

Step 2: The NEF verifies this request.

Step 3: The NEF uses the private IP address or a port number of the private IP address to discover an NRF for address information (IP address, ID, and the like) of a UPF serving a current terminal.

The NEF triggers Nnrf_NFDiscovery_Request; and the network element query request carries a terminal identifier, a private IP address of a terminal, or a port number.

Step 4: The NRF feeds back the address information of the UPF serving the current terminal to the NEF through Nnrf_NFDiscovery_Response signaling. The address information of the UPF includes a UPF ID, a UPF IP address or port number, a UPF FQDN, and the like. The UPF is a UPF capable of providing the first information, which is a new capability of the UPF, while current UPFs do not have such an ability to provide the first information. In this application, capabilities of the UPF have been extended.

Step 5: The NEF sends a request to the UPF for requesting the UPF to provide the public IP address corresponding to the private IP address, where the request may be Nupf_EventExposure_Subscribe or Nupf_GetPublicUEIPaddr_Get.

Step 6: The UPF provides the public IP address to the NEF, where the signaling may be Nupf_EventExposure_Notify or Nupf_GetPublicUEIPaddr_Get response.

Step 7: The NEF sends the public IP address to the NWDAF, where the signaling may be Nnef_GetPublicUEIPaddr_Get response; and the public IP address may be a public IP address of a terminal.

Step 8: The NWDAF triggers the sending of a subscription request to the AF (or NEF), where the subscription request carries the public IP address, so that the AF can directly determine a target terminal for data collection without triggering any other processes.

After obtaining the public IP address, the NWDAF sends a subscription request to the AF or NEF, for example, sending Naf_Event_Exposure_Subscribe to the AF or Nnef_EventExposure_Subscribe to the NEF, where the subscription request includes the public IP address. After receiving the subscription request, the NEF also sends Naf_Event_Exposure_Subscribe to the AF.

### Embodiment 4:

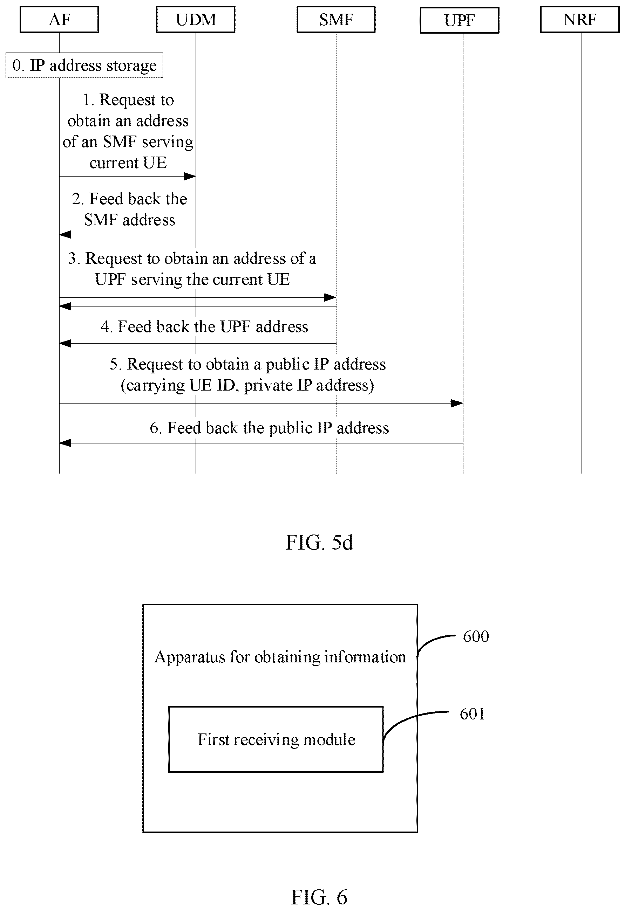

Referring to FIG. 5d, FIG. 5d is a fourth schematic diagram of an application scenario of a method for obtaining information according to an embodiment of this application, specifically including the following steps.

Step 0: An AF performs IP address storage.

Step 1: The AF requests context management information of a terminal from a UDM.

Step 2: The AF obtains the context management information of the terminal responded by the UDM.

Step 3: A trusted AF (or NEF, or NWDAF) sends a request to an SMF for requesting to obtain an address of a UPF serving the terminal (serving the terminal identifier) (for example, UPF ID or UPF IP address).

Step 4: The trusted AF (or NEF, or NWDAF) obtains the address of the UPF serving the terminal (serving the terminal identifier) from the SMF.

Step 5: The trusted AF (or NEF, or NWDAF) requests the UPF to provide a public IP address of a terminal corresponding to the terminal identifier, where the request includes a terminal identifier and a private IP address of the terminal.

In other words, the NEF, AF, or NWDAF no longer obtains the first information from the SMF but obtains the first information from the first communication device UPF.

The request may be Nupf_EventExposure_Subscribe or Nupf_GetPublicUEIPaddr_Get.

Step 6: The UPF sends the public IP address of the terminal to the trusted AF (or NEF, or NWDAF).

The method for obtaining information provided in this embodiment of this application can be executed by an apparatus for obtaining information. In an embodiment of this application, an apparatus for obtaining information for executing the method for obtaining information is used as an example to describe the apparatus for obtaining information according to the embodiments of this application.

Referring to FIG. 6, FIG. 6 is a first structural diagram of an apparatus for obtaining information according to an embodiment of this application. As shown in FIG. 6, the apparatus 600 for obtaining information includes:
a first receiving module 601, configured to receive a first request, where the first request is used for requesting to obtain first information; and
the first information includes at least one of the following:
   a second internet protocol IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

Optionally, the first request includes at least one of the following:
the first IP address;
a first port number, where the first port number is associated with the first IP address;
a terminal identifier; and
an event identifier, where the event identifier is used for indicating invocation of a first service of the first communication device, and the first service is used for obtaining the first information.

Optionally, the first request further includes first indication information, and the first indication information is used for indicating at least one of the following:
the first IP address being a private IP address;
obtaining the second IP address corresponding to the first IP address; and
obtaining the first IP address or the second IP address corresponding to the terminal identifier.

Optionally, the first receiving module 601 is further configured to:
receive the first request sent by a second communication device.

The apparatus further includes:
a sending module, configured to send a first response to the second communication device, where the first response includes the first information.

Optionally, the first IP address is a private IP address, and the second IP address is a public IP address.

Optionally, the first IP address is an IP address of a terminal corresponding to the terminal identifier.

It should be noted that the apparatus 600 for obtaining information provided in this embodiment of this application can implement the processes implemented by the first communication device in the method embodiment in FIG. 2, with the same technical effects achieved. To avoid repetition, details are not described herein again.

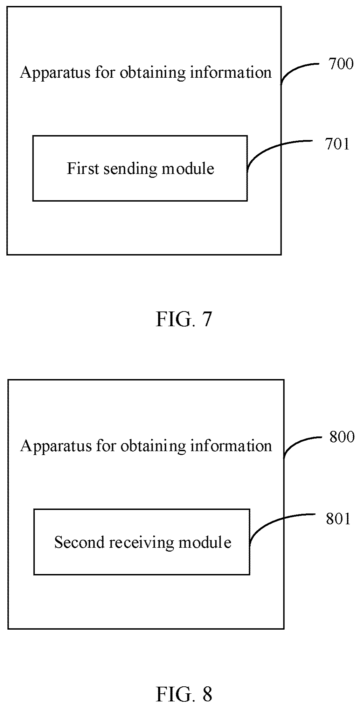

Referring to FIG. 7, FIG. 7 is a second structural diagram of an apparatus for obtaining information according to an embodiment of this application. As shown in FIG. 7, the apparatus 700 for obtaining information includes:
a first sending module 701, configured to send a first request to a first communication device, where the first request is used for requesting to obtain first information; and
the first information includes at least one of the following:
   a second IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

Optionally, the first request includes at least one of the following:
the first IP address;
a first port number, where the first port number is associated with the first IP address;
a terminal identifier; and
an event identifier, where the event identifier is used for indicating invocation of a first service of the first communication device, and the first service is used for obtaining the first information.

Optionally, the apparatus further includes:
a receiving module, configured to receive a second request sent by a third communication device, where the second request is used for requesting to obtain the first information.

Optionally, the second request includes at least one of the following:
the first IP address;
a first port number, where the first port number is associated with the first IP address;
a terminal identifier; and
first indication information, where the first indication information is associated with the first IP address or the second IP address.

Optionally, the apparatus further includes:
a determining module, configured to determine the event identifier based on the second request.

Optionally, the first request further includes first indication information, and the first indication information is used for indicating at least one of the following:
the first IP address being a private IP address;
obtaining the second IP address corresponding to the first IP address; and
obtaining the first IP address or the second IP address corresponding to the terminal identifier.

Optionally, the receiving module is further configured to:
receive a first response sent by the first communication device, where the first response includes the first information.

Optionally, the first sending module 701 is further configured to:
send, by the second communication device, the first information to a third communication device.

Optionally, the first IP address is a private IP address, and the second IP address is a public IP address.

Optionally, the first IP address is an IP address of a terminal corresponding to the terminal identifier.

The apparatus 700 for obtaining information provided in this embodiment of this application can implement the processes implemented by the second communication device in the method embodiment in FIG. 3, with the same technical effects achieved. To avoid repetition, details are not described herein again.

Referring to FIG. 8, FIG. 8 is a third structural diagram of an apparatus for obtaining information according to an embodiment of this application. As shown in FIG. 8, the apparatus 800 for obtaining information includes:
a second receiving module 801, configured to receive first information sent by a first communication device or a second communication device; where
the first information includes at least one of the following:
   a second IP address corresponding to a first IP address;
   a mapping relationship between the first IP address and the second IP address;
   the second IP address; and
   a second port number, where the second port number is associated with the second IP address; and
   the first IP address is a private IP address, and the second IP address is a public IP address.

Optionally, the apparatus further includes:
a sending module, configured to send a first subscription request to a fourth communication device, where the first subscription request is used for requesting to collect target terminal data.

Optionally, the first subscription request includes at least one of the following:
a terminal identifier;
the second IP address; and
the second port number, where the second port number is associated with the second IP address.

Optionally, the second IP address is an IP address corresponding to the terminal identifier; or
the second port number is a port number corresponding to the terminal identifier.

Optionally, at least one of the second IP address, the second port number, and the terminal identifier is used for determining a target terminal.

Optionally, the first IP address is a private IP address, and the second IP address is a public IP address.

The apparatus 800 for obtaining information provided in this embodiment of this application can implement the processes implemented by the third communication device in the method embodiment in FIG. 4, with the same technical effects achieved. To avoid repetition, details are not described herein again.

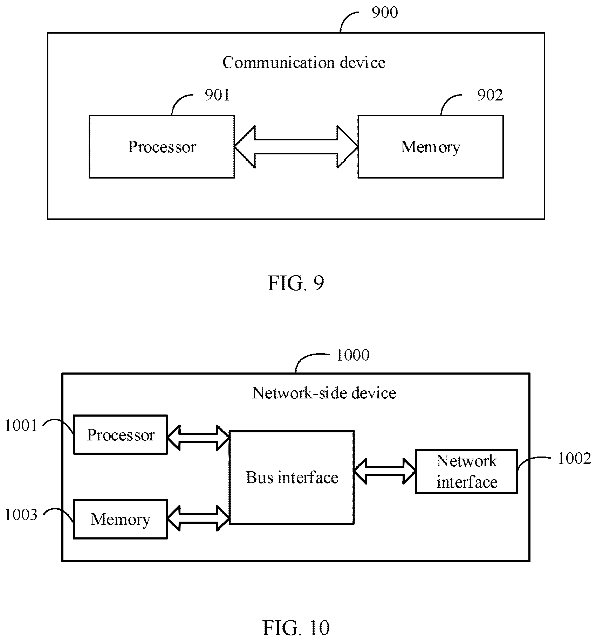

Optionally, as shown in FIG. 9, an embodiment of this application further provides a communication device 900, including a processor 901 and a memory 902, where the memory 902 stores a program or instructions capable of running on the processor 901. For example, when the communication device 900 is a first communication device, the program or instructions are executed by the processor 901 to implement the steps of the foregoing embodiment of the method shown in FIG. 2, with the same technical effects achieved. In a case that the communication device 900 is a second communication device, when the program or instructions are executed by the processor 901, the steps of the foregoing method embodiment shown in FIG. 3 are implemented, with the same technical effects achieved. In a case that the communication device 900 is a third communication device, when the program or instructions are executed by the processor 901, the steps of the foregoing method embodiment shown in FIG. 4 are implemented, with the same technical effects achieved. To avoid repetition, details are not described herein again.

An embodiment of this application further provides a communication device, including a processor and a communication interface, where the communication interface is configured to receive a first request, and the first request is used for requesting to obtain first information; or the communication interface is configured to send a first request to a first communication device, and the first request is used for requesting to obtain first information; or the communication interface is configured to receive first information sent by a first communication device or a second communication device; and the first information includes at least one of the following: a second IP address corresponding to a first IP address; a mapping relationship between the first IP address and the second IP address; the second IP address; and a second port number, where the second port number is associated with the second IP address; and the first IP address is a private IP address, and the second IP address is a public IP address.

The communication device embodiment corresponds to the foregoing method embodiments. All implementations in the foregoing method embodiments may be applicable to the communication device embodiment, with the same technical effects achieved.

Specifically, an embodiment of this application further provides a network-side device. As shown in FIG. 10, the network-side device 1000 includes a processor 1001, a network interface 1002, a memory 1003. The network interface 1002 may be, for example, a common public radio interface (common public radio interface, CPRI).

Specifically, the network-side device 1000 in this embodiment of this application further includes: instructions or a program stored in the memory 1003 and capable of running on the processor 1001. The processor 1001 invokes the instructions or program in the memory 1003 to execute the method executed by the modules shown in FIG. 6, FIG. 7, or FIG. 8, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing method for obtaining information embodiment are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disk.

An embodiment of this application further provides a chip, where the chip includes a processor and a communication interface, the communication interface is coupled to the processor, and the processor is configured to run a program or instructions to implement the processes of the foregoing method for obtaining information embodiment, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing method obtaining information embodiments, with the same technical effects achieved. To avoid repetition, details are not described herein again.

An embodiment of this application further provides a communication system, including at least one of a first communication device, a second communication device, and a third communication device, where the first communication device is capable of being configured to execute the steps of the method for obtaining information as shown in FIG. 2, the second communication device is capable of being configured to execute the steps of the method for obtaining information as shown in FIG. 3, and the third communication device is capable of being configured to execute the steps of the method for obtaining information as shown in FIG. 4.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disk), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for obtaining information, comprising:
receiving, by a first communication device, a first request, wherein the first request is used for requesting to obtain first information; and
the first information comprises at least one of the following:
a second internet protocol IP address corresponding to a first IP address;
a mapping relationship between the first IP address and the second IP address;
the second IP address; and
a second port number, wherein the second port number is associated with the second IP address; and
the first IP address is a private IP address, and the second IP address is a public IP address.

2. The method according to claim 1, wherein the first request comprises at least one of the following:
the first IP address;
a first port number, wherein the first port number is associated with the first IP address;
a terminal identifier; and
an event identifier, wherein the event identifier is used for indicating invocation of a first service of the first communication device, and the first service is used for obtaining the first information.

3. The method according to claim 2, wherein the first request further comprises first indication information, and the first indication information is used for indicating at least one of the following:
the first IP address being a private IP address;
obtaining the second IP address corresponding to the first IP address; and
obtaining the first IP address or the second IP address corresponding to the terminal identifier.

4. The method according to claim 1, wherein the receiving, by a first communication device, a first request comprises:
receiving, by the first communication device, the first request sent by a second communication device; and
the method further comprises:
sending, by the first communication device, a first response to the second communication device, wherein the first response comprises the first information.

5. The method according to claim 2, wherein the first IP address is an IP address of a terminal corresponding to the terminal identifier.

6. A method for obtaining information, comprising:
sending, by a second communication device, a first request to a first communication device, wherein the first request is used for requesting to obtain first information; and
the first information comprises at least one of the following:
a second IP address corresponding to a first IP address;
a mapping relationship between the first IP address and the second IP address;
the second IP address; and
a second port number, wherein the second port number is associated with the second IP address; and
the first IP address is a private IP address, and the second IP address is a public IP address.

7. The method according to claim 6, wherein the first request comprises at least one of the following:
the first IP address;
a first port number, wherein the first port number is associated with the first IP address;
a terminal identifier; and
an event identifier, wherein the event identifier is used for indicating invocation of a first service of the first communication device, and the first service is used for obtaining the first information.

8. The method according to claim 7, wherein before the sending, by a second communication device, a first request to a first communication device, the method further comprises: receiving, by the second communication device, a second request sent by a third communication device, wherein the second request is used for requesting to obtain the first information.

9. The method according to claim 8, wherein the second request comprises at least one of the following:
the first IP address;
a first port number, wherein the first port number is associated with the first IP address;
a terminal identifier; and
first indication information, wherein the first indication information is associated with the first IP address or the second IP address.

10. The method according to claim 8, wherein after the receiving, by the second communication device, a second request sent by a third communication device, the method further comprises:
determining, by the second communication device, the event identifier based on the second request.

11. The method according to claim 7 or 9, wherein the first request further comprises first indication information, and the first indication information is used for indicating at least one of the following:
the first IP address being a private IP address;
obtaining the second IP address corresponding to the first IP address; and
obtaining the first IP address or the second IP address corresponding to the terminal identifier.

12. The method according to claim 6, wherein after the sending, by a second communication device, a first request to a first communication device, the method further comprises:
receiving, by the second communication device, a first response sent by the first communication device, wherein the first response comprises the first information.

13. The method according to claim 12, wherein after the receiving, by the second communication device, a first response sent by the first communication device, the method further comprises:
sending, by the second communication device, the first information to a third communication device.

14. The method according to claim 9, wherein the first IP address is an IP address of a terminal corresponding to the terminal identifier.

15. A method for obtaining information, comprising:
receiving, by a third communication device, first information sent by a first communication device or a second communication device; wherein
the first information comprises at least one of the following:
a second IP address corresponding to a first IP address;
a mapping relationship between the first IP address and the second IP address;
the second IP address; and
a second port number, wherein the second port number is associated with the second IP address; and
the first IP address is a private IP address, and the second IP address is a public IP address.

16. The method according to claim 15, wherein the method further comprises:
sending, by the third communication device, a first subscription request to a fourth communication device, wherein the first subscription request is used for requesting to collect target terminal data.

17. The method according to claim 16, wherein the first subscription request comprises at least one of the following:
a terminal identifier;
the second IP address; and
the second port number, wherein the second port number is associated with the second IP address.

18. The method according to claim 17, wherein the second IP address is an IP address corresponding to the terminal identifier; or
the second port number is a port number corresponding to the terminal identifier.

19. The method according to claim 17, wherein at least one of the second IP address, the second port number, and the terminal identifier is used for determining a target terminal.

20. An apparatus for obtaining information, comprising:
a first receiving module, configured to receive a first request, wherein the first request is used for requesting to obtain first information; and
the first information comprises at least one of the following:
a second internet protocol IP address corresponding to a first IP address;
a mapping relationship between the first IP address and the second IP address;
the second IP address; and
a second port number, wherein the second port number is associated with the second IP address; and
the first IP address is a private IP address, and the second IP address is a public IP address.

21. An apparatus for obtaining information, comprising:
a first sending module, configured to send a first request to a first communication device, wherein the first request is used for requesting to obtain first information; and
the first information comprises at least one of the following:
a second IP address corresponding to a first IP address;
a mapping relationship between the first IP address and the second IP address;
the second IP address; and
a second port number, wherein the second port number is associated with the second IP address; and
the first IP address is a private IP address, and the second IP address is a public IP address.

22. An apparatus for obtaining information, comprising:
a second receiving module, configured to receive first information sent by a first communication device or a second communication device; wherein
the first information comprises at least one of the following:
a second IP address corresponding to a first IP address;
a mapping relationship between the first IP address and the second IP address;
the second IP address; and
a second port number, wherein the second port number is associated with the second IP address; and
the first IP address is a private IP address, and the second IP address is a public IP address.

23. A communication device, comprising a processor and a memory, wherein the memory stores a program or instructions capable of running on the processor, and when the program or instructions are executed by the processor, the steps of the method for obtaining information according to any one of claims 1 to 5 are implemented, or the steps of the method for obtaining information according to any one of claims 6 to 14 are implemented, or the steps of the method for obtaining information according to any one of claims 15 to 19 are implemented.

24. A readable storage medium, wherein the readable storage medium stores a program or instructions, and when the program or instructions are executed by a processor, the steps of the method for obtaining information according to any one of claims 1 to 5 are implemented, or the steps of the method for obtaining information according to any one of claims 6 to 14 are implemented, or the steps of the method for obtaining information according to any one of claims 15 to 19 are implemented.
